Europäisches Patentamt

European Patent Office

Office européen des brevets

(19)

(11) Publication number: **0 052 496**
**B1**

(12) **EUROPEAN PATENT SPECIFICATION**

(45) Date of publication of patent specification: **14.03.84**

(51) Int. Cl.³: **C 02 F 1/52, C 01 B 35/00**

(21) Application number: **81305398.0**

(22) Date of filing: **13.11.81**

(54) Process for removing soluble boron compounds from aqueous effluents.

(30) Priority: **13.11.80 IT 2594180**
**15.10.81 IT 2450381**

(43) Date of publication of application:
**26.05.82 Bulletin 82/21**

(45) Publication of the grant of the patent:
**14.03.84 Bulletin 84/11**

(84) Designated Contracting States:
**CH DE FR GB LI**

(56) References cited:
**FR - A - 2 058 618**
**US - H - 995 006**

**CHEMICAL ABSTRACTS, vol. 89, no. 6, August 7, 1978, page 284, abstract 48405a, COLUMBUS, OHIO (US), Y.H. CHANG et al.: "The removal of boron from incinerator quench water: hydrous metallic oxides versus an ion-specific resin"**
**CHEMICAL ABSTRACTS, vol. 89, no. 10, September 4, 1978, page 277, abstract 79834u, COLUMBUS, OHIO (US)**

(73) Proprietor: **ISTITUTO GUIDO DONEGANI S.p.A.**
**Via Caduti del Lavoro**
**Novara (IT)**

(72) Inventor: **Mattera, Adriano**
**13, Via Tadini**
**Novara (IT)**
Inventor: **Quaglino, Marino**
**11, Via Girondella**
**Trecate Novara (IT)**
Inventor: **Spighi, Pasqualino**
**37, Viale Martiri della Liberta**
**Fabriano Ancona (IT)**
Inventor: **Stolfi, Massimo**
**10, Via Keplero**
**Milan (IT)**

(74) Representative: **Whalley, Kevin et al,**
**Marks & Clerk 57/60 Lincoln's Inn Fields**
**London WC2A 3LS (GB)**

Courier Press, Leamington Spa, England.

Process for removing soluble boron compounds from aqueous effluents

This invention relates to a process for removing soluble boron compounds from aqueous effluents.

As is known, to remove soluble boron from an aqueous effluent it is possible to cause $Mg(OH)_2$ to precipitate, which adsorbs the boron ions. This method does not give good results when the boron concentration in the effluent to be treated is low, for example 10 ppm. In fact the removal efficiency, which is about 90% when the initial concentration of boron is approximately 300 ppm, decreases to about 50% when the initial concentration is approximately 10 ppm.

Thus, it is an object of the present invention to provide a process for removing boron from aqueous effluents which is capable of providing a very low final boron content.

It. is another object of this invention to provide a process capable of giving good results with both high and low initial boron contents.

The present invention provides a process for removing soluble boron compounds from aqueous effluents, comprising contacting the effluent, under stirring, with a divalent metal sulphate $Me_ISO_4$ and a divalent metal hydroxide $Me_{II}(OH)_2$, the sulphate-hydroxide couple being selected from

$BeSO_4$—$Ba(OH)_2$,
$BeSO_4$—$Sr(OH)_2$,
$BeSO_4$—$Ca(OH)_2$,
$MgSO_4$—$Ba(OH)_2$,
$MgSO_4$—$Sr(OH)_2$,
$MgSO_4$—$Ca(OH)_2$,
$CaSO_4$—$Ba(OH)_2$,
$CaSO_4$—$SR(OH)_2$,
$SrSO_4$—$Ba(OH)_2$,
$ZnSO_4$—$Ba(OH)_2$,
$ZnSO_4$—$Sr(OH)_2$,
$ZnSO_4$—$Ca(OH)_2$,
$CdSO_4$—$Ba(OH)_2$,
$CdSO_4$—$Sr(OH)_2$, and
$CdSO_4$—$Ca(OH)_2$,

the said sulphate $Me_ISO_4$ and the said hydroxide $Me_{II}(OH)_2$, by reacting with each other, precipitating sulphate $Me_{II}SO_4$ and hydroxide $Me_I(OH)_2$, the amount of the said hydroxide $Me_{II}(OH)_2$ being at least stoichiometric with respect to the amount of the said sulphate $Me_ISO_4$ and the precipitation pH being from 7 to 10 when $Me_ISO_4$ is $ZnSO_4$ and from 10 to 13 in the other cases; and the conclusion of the precipitation allowing the effluent to decant and filtering or centrifuging it, thus separating the boron-containing precipitate from the purified effluent.

The pH range of from 7 to 10 or from 10 to 13 can be attained by employing an excess of $Me_{II}(OH)_2$ with respect to the stoichiometric amount of $Me_ISO_4$. Otherwise it is possible to use a stoichiometric amount of $Me_{II}(OH)_2$ and to attain the desired pH by addition of an alkaline hydroxide, for example NaOH.

The amount of $Me_ISO_4$ to be used in order to achieve an efficient boron precipitation is determined experimentally, and depends on the water-solubility of the sulphate itself and on the water-insolubility of the hydroxide $Me_I(OH)_2$.

In the case of the $MgSO_4$—$Ba(OH)_2$ couple, it has been found that an effective precipitation is attained when the ratio:

$$\frac{\text{ppm of boron in the effluent}}{SO_4^= \text{ (g/l)}}$$

is less than or equal to 5. Precipitation of $Me_{II}SO_4$ and of $Me_I(OH)_2$ is preferably effected at a substantially constant pH value. The exact pH value which permits the best boron removal to be obtained depends on the boron concentration in the water to be treated and may be determined by means of tests, case by case.

Preferred sulphate-hydroxide couples are

$MgSO_4$—$Ba(OH)_2$,
$MgSO_4$—$Ca(OH)_2$
and
$ZnSO_4$—$Ba(OH)_2$;

the couple $MgSO_4$—$Ba(OH)_2$ is particularly preferred.

As sulphate $Me_ISO_4$ and hydroxide $Me_{II}(OH)_2$ it is possible to use both anhydrous compounds and hydrated compounds. As hydrates it is possible to use, for example,

$BeSO_4 . 4H_2O$,
$MgSO_4 . 7H_2O$,
$CaSO_4 . 2H_2O$,
$Ba(OH)_2 . 8H_2O$,
$Sr(OH)_2 . 8H_2O$,
and
$Ca(OH)_2 . H_2O$.

When anhydrous sulphate $Me_ISO_4$ or anhydrous hydroxide $Me_{II}(OH)_2$ are relatively little soluble in water, it is preferable to use the hydrates.

If the effluent already contains $SO_4^=$ and/or $OH^-$ and/or $Me_I^{++}$ and/or $Me_{II}^{++}$ ions, it is possible to use lower amounts of $Me_ISO_4$ and/or $Me_{II}(OH)_2$.

It is not necessary to control the temperature in order to obtain a good removal of boron, the temperature employed in the process is that of the effluent to be treated.

It is possible to add first $Me_ISO_4$ and then $Me_{II}(OH)_2$ to the effluent. The order of addition may alternatively be reversed.

While adding the first reagent, the effluent is stirred. Stirring is continued when the second reagent is added, i.e. during the precipitation step. At the conclusion of the precipitation, the effluent is allowed to decant and it is then filtered or centrifuged.

The boron content in the water to be treated may vary within a very wide range. It may be very high (for example 500 ppm), as well as very low (for example 5 ppm). In all cases the removal efficiency is very high.

When operating in the best conditions, i.e. for example with the $MgSO_4$—$Ba(OH)_2$ couple, a residual content below 2 ppm may be obtained, a residual content of for example 0.5 ppm being sometimes reached.

When the ratio

$$\frac{\text{ppm of boron in the effluent}}{SO_4^= \text{ (g/l)}}$$

is less than or equal to 5, in the case of the $MgSO_4$—$Ba(OH)_2$ couple, the residual boron content in the effluent is less than approximately 4 ppm. The lower the ratio, the less the residual boron content in the effluent.

The invention will be further described with reference to the following illustrative Examples.

Example 1

1.37 g of $H_3BO_3$ were dissolved in 2 liters of deionized water, so obtaining a solution containing 120 ppm of boron.

52.5 g of $MgSO_4$ . $7H_2O$ were added, under stirring, to 1 liter of the solution. Successively, 67.5 g of $Ba(OH)_2$ . $8H_2O$ were added, under stirring, in about 10 minutes; the addition was effected in decreasing amounts so as to obtain a pH having an average value of 11.5±0.3. The solution, in which a white precipitate formed, was allowed to decant for about 30 minutes, whereupon it was filtered.

The filtered solution was subjected to spectrophotometric analysis and revealed a boron content below 4 ppm.

Starting from solutions containing boron in amounts of 70 ppm (0.4 g/l of $H_3BO_3$) and 23 ppm (0.13 g/l of $H_3BO_3$), the process was conducted as described above with the addition respectively of 31 g/l of $MgSO_4$ . $7H_2O$ and 39.6 g/l of $Ba(OH)_2$ . $8H_2O$ to the solution containing 70 ppm of boron, and of 10 g/l of $MgSO_4$ . $7H_2O$ and 12.8 g/l of $Ba(OH)_2$ . $8H_2O$ to the solution containing 23 ppm of boron. After decantation and filtration, the boron content in both the solutions was decreased to below 4 ppm.

Example 2

1.37 g of $H_3BO_3$ were dissolved in 2 liters of deionized water, obtaining a solution containing 120 ppm of boron.

77.5 g of $MgSO_4$ . $7H_2O$ were added, under stirring, to 1 liter of the solution. Successively, 98.5 g of $Ba(OH)_2$ . $8H_2O$ were added, under stirring, in about 10 minutes, the addition was effected in decreasing amounts so as to obtain an average pH value of 11.5±0.3. The solution was allowed to decant for about 30 minutes, whereupon it was filtered.

The filtered solution was subjected to spectrophotometric analysis and revealed a boron content below 2 ppm.

Starting from solutions containing 70 ppm and 23 ppm of boron, obtained by dissolving, in 1 liter of deionized water, 0.4 g and 0.13 g of $H_3BO_3$ respectively, 45 g of $MgSO_4$ . $7H_2O$ and 57.6 g of $Ba(OH)_2$ . $8H_2O$ were added to the solution containing 70 ppm of boron, and 15 g of $MgSO_4$ . $7H_2O$ and 19.5 g of $Ba(OH)_2$ . $8H_2O$ were added to the solution containing 23 ppm of boron. Both solutions, after decantation and filtration, revealed, on spectrophotometric analysis, a boron content less than or equal to 2 ppm.

Example 3

0.26 g of $H_3BO_3$ were dissolved in 2 liters of deionized water, obtaining a solution containing 23 ppm of boron.

32.3 g of $MgSO_4$ . $7H_2O$ were added, under stirring, to 1 liter of the solution. Successively, 10.4 g of $Ca(OH)_2$ were added, under stirring, in about 10 minutes; the addition was effected in decreasing amounts so as to obtain an average pH value of 11.3±0.3. The solution, in which a white precipitate formed, was allowed to decant for about 30 minutes and was then filtered.

The filtered solution was subjected to spectrophotometric analysis and revealed a boron content of approximately 10 ppm.

Example 4

By following the procedure described in Example 3, to a solution containing 23 ppm of boron there were successively added 15.3 g of $MgSO_4$ . $7H_2O$ and 4.6 g of $Ca(OH)_2$, maintaining the pH at a value of 11.3±0.3. The purified solution had a boron content of about 12 ppm.

Example 5

By following the procedure described in Example 3, to a solution containing 120 ppm of boron there were successively added 90.4 g of $ZnSO_4$ . $7H_2O$ and 98.5 g of $Ba(OH)_2$ . $8H_2O$, maintaining the pH at a value of 8.8±0.3. The purified solution had a boron content of about 6 ppm.

**Claims**

1. A process for removing soluble boron compounds from aqueous effluents, characterized by comprising contacting the effluent, under stirring, with a divalent metal sulphate $Me_ISO_4$ and a divalent metal hydroxide $Me_{II}(OH)_2$, the sulphate-hydroxide couple being selected from

$BeSO_4$—$Ba(OH)_2$,
$BeSO_4$—$Sr(OH)_2$,
$BeSO_4$—$Ca(OH)_2$,

MgSO$_4$—Ba(OH)$_2$,
MgSO$_4$—Sr(OH)$_2$,
MgSO$_4$—Ca(OH)$_2$,
CaSO$_4$—Ba(OH)$_2$,
CaSO$_4$—Sr(OH)$_2$,
SrSO$_4$—Ba(OH)$_2$,
ZnSO$_4$—Ba(OH)$_2$,
ZnSO$_4$—Sr(OH)$_2$,
ZnSO$_4$—Ca(OH)$_2$,
CdSO$_4$—Ba(OH)$_2$,
CdSO$_4$—SR(OH)$_2$

and

CdSO$_4$—Ca(OH)$_2$,

the said sulphate Me$_I$SO$_4$ and the said hydroxide Me$_{II}$(OH)$_2$, by reacting with each other, precipitating sulphate Me$_{II}$SO$_4$ and hydroxide Me$_I$(OH)$_2$, the amount of the said hydroxide Me$_{II}$(OH)$_2$ being at least stoichiometric with respect to the amount of the said sulphate Me$_I$SO$_4$ and the precipitation pH being from 7 to 10 when Me$_I$SO$_4$ is ZnSO$_4$ and from 10 to 13 in the other cases; and at the conclusion of the precipitation allowing the effluent to decant and filtering or centrifuging it, thus separating the boron-containing precipitate from the purified effluent.

2. A process as claimed in Claim 1, characterized in that the precipitation pH is brought to a value of from 7 to 10 or from 10 to 13 by using an excess of Me$_{II}$(OH)$_2$ with respect to the stoichiometric amount of Me$_I$SO$_4$.

3. A process as claimed in Claim 1, characterized in that the amount of Me$_{II}$(OH)$_2$ is stoichiometric with respect to the amount of Me$_I$SO$_4$ and in that the precipitation pH is brought to a value of from 7 to 10 or from 10 to 13 by using an alkaline hydroxide.

## Patentansprüche

1. Verfahren zum Entfernen löslicher Borverbindungen aus wässrigen Abwässern, dadurch gekennzeichnet, daß dieses umfaßt: Inkontaktbringen des Abwassers unter Rühren mit einem Sulfat eines zweiwertigen Metalles Me$_I$SO$_4$ und einem Hydroxid eines zweiwertigen Metalles Me$_{II}$(OH)$_2$, wobei das Sulfat-Hydroxid-Paar ausgewählt wurde von

BeSO$_4$—Ba(OH)$_2$,
BeSO$_4$—Sr(OH)$_2$,
BeSO$_4$—Ca(OH)$_2$,
MgSO$_4$—Ba(OH)$_2$,
MgSO$_4$—Sr(OH)$_2$,
MgSO$_4$—Ca(OH)$_2$,
CaSO$_4$—Ba(OH)$_2$,
CaSO$_4$—Sr(OH)$_2$,
SrSO$_4$—Ba(OH)$_2$,
ZnSO$_4$—Ba(OH)$_2$,
ZnSO$_4$—Sr(OH)$_2$,
ZnSO$_4$—Ca(OH)$_2$,
CdSO$_4$—Ba(OH)$_2$,
CdSO$_4$—Sr(OH)$_2$,

und

CdSO$_4$—Ca(OH)$_2$,

wobei das Sulfat Me$_I$SO$_4$ und das Hydroxid Me$_{II}$(OH)$_2$ durch Umsetzung miteinander eine Sulfatniederschlag Me$_{II}$SO$_4$ und einen Hydroxidniederschalg Me$_I$(OH)$_2$ bilden, und wobei die Menge des genannten Hydroxids Me$_{II}$(OH)$_2$ wenigstens stöchiometrisch in Bezug auf die Menge des genannten Sulfats Me$_I$SO$_4$ ist, der pH-Wert bei der Ausfällung von 7 bis 10 beträgt, sofern Me$_I$SO$_4$=ZnSO$_4$ ist und von 10 bis 13 in den anderen Fällen beträgt; am Ende der Ausfällung ein Dekantieren des Abwassers und Filtrieren oder Zentrifugieren desselben, wodurch der Bor-haltige Niederschalg von dem gereinigten Abwasser getrennt wird.

2. Verfahren nach Anspruch 1, dadurch gekennzeichnet daß der pH-Wert bei der Ausfällung auf einen Wert von 7 bis 10 oder von 10 bis 13 eingestellt wird, indem ein Überschuß an Me$_{II}$(OH)$_2$ in Bezug auf die stöchiometrische Menge an Me$_I$SO$_4$ verwendet wird.

3. Verfahren nach Anspruch 1, dadurch gekennzeichnet, daß die Menge an Me$_{II}$(OH)$_2$ in Bezug auf die Menge an Me$_I$SO$_4$ stöchiometrisch ist und daß der pH-Wert bei der Ausfällung auf 7 bis 10 oder 10 bis 13 eingestellt wird, indem ein Alkalihydroxid verwendet wird.

## Revendications

1. Un procédé de séparation de composés de bore solubles d'effluents aqueux, caractérisé en ce que l'on met en contact l'effluent, sous agitation, avec un sulfate de métal divalent Me$_I$SO$_4$ et avec un hydroxyde de métal divalent Me$_{II}$(OH)$_2$, le couple sulfate-hydroxyde étant choisi parmi

BeSO$_4$—Ba(OH)$_2$,
BeSO$_4$—Sr(OH)$_2$,
BeSO$_4$—Ca(OH)$_2$,
MgSO$_4$—Ba(OH)$_2$,
MgSO$_4$—Sr(OH)$_2$,
MgSO$_4$—Ca(OH)$_2$,.
CaSO$_4$—Ba(OH)$_2$,
CaSO$_4$—Sr(OH)$_2$,
SrSO$_4$—Ba(OH)$_2$,
ZnSO$_4$—Ba(OH)$_2$,
ZnSO$_4$—Sr(OH)$_2$,
ZnSO$_4$—Ca(OH)$_2$,
CdSO$_4$—Ba(OH)$_2$,
CdSO$_4$—Sr(OH)$_2$,

et

CdSO$_4$—Ca(OH)$_2$,

ledit sulfate Me$_I$SO$_4$ et ledit hydroxyde Me$_{II}$(OH)$_2$, par réaction entre-eux, provoquant la précipitation du sulfate Me$_{II}$SO$_4$ et de l'hydroxyde Me$_I$(OH)$_2$, la quantité d'hydroxyde Me$_I$(OH)$_2$ étant au moins stoéchiométrique par rapport à la quantité dudit sulfate Me$_I$SO$_4$ et le pH de précipitation étant compris entre 7 et 10 lorsque Me$_I$SO$_4$ est ZnSO$_4$ et entre 10 et 13 dans les autres cas, et à l'achèvement de la précipitation, l'éffluent étant laissé à décanter et subissant une filtration ou une centrifugation ce qui permet de séparer le précipité contenant le bore de l'effluent purifié.

2. Un procédé tel que revendiqué dans la revendication 1, caractérisé en ce que le pH de précipitation est amené à une valeur de 7 à 10 ou de 10 à 13 par emploi d'un excès de $Me_{II}(OH)_2$ par rapport à la proportion stoéchiométrique de $Me_ISO_4$.

3. Un procédé tel que revendiqué dans la revendication 1, caractérisé en ce que la quantité de $Me_{II}(OH)_2$ est stoéchiométrique que par rapport à la quantité de $Me_ISO_4$ et en ce que le pH de précipitation est porté à une valeur de 7 à 10 ou de 10 à 13 par emploi d'un hydroxyde alcalin.